Europäisches Patentamt

European Patent Office

Office européen des brevets

(11) Publication number: **0 499 301 A2**

# (12) EUROPEAN PATENT APPLICATION

(21) Application number: **92200184.7**

(22) Date of filing: **24.01.92**

(51) Int. Cl.⁵: **A23L 1/18, A21B 5/02**

(30) Priority: **24.01.91 PCT/BE91/00005**

(43) Date of publication of application:
**19.08.92 Bulletin 92/34**

(84) Designated Contracting States:
**AT BE CH DE DK ES FR GB IT LI NL PT SE**

(71) Applicant: **VAN DEN BERGHE, René**
**Baneike 24**
**B-9660 Brakel(BE)**

(72) Inventor: **VAN DEN BERGHE, René**
**Baneike 24**
**B-9660 Brakel(BE)**

(54) Improvements n the production of granular crackers.

(57) In a cracker production apparatus of the type comprising a heatable mould consisting of a stationary upper mould element (7), a movable ring mould (10) and a reciprocating lower mould element or punch (9) driven by a hydraulically actuated toggle-mechanism (11), the improvement wherein a twin-head mould arrangement for high rate, automatic manufacture of uniformly expanded crackers is driven by a single hydraulic drive unit formed of two aligned, cooperating double-action pistons, whereby a first piston is adapted to control, in combination with specific central program/microprocessing means, an adjustable final baking pressure, and a second piston to regulate a desired expanded cracker thickness, and this independant of grain feed and/or apparatus related mechanical parameters.

Advantageously two twin-head machines are arranged in tandem with a single hydraulic drive unit and mutually connected toggle members whereby a cracker conveyor belt passes between the cracker discharge chutes of said tandem arrangement of twin-head machines. The ring moulds may be designed for allowing multiple cracker production in each mould set.

FIG. 2

The present invention pertains to the field of manufacturing expanded food products by a direct pressure-baking process. Accordingly cereals such as rice, corn, wheat, barley, oats, soja beans and mixtures of said granular raw materials, including broke and optional taste additions, are subjected to baking or roasting under high crushing pressure in a heated mould and thereafter caused to expand in the form of a selfsustaining cracker or cake of desired shape and thickness.

More in particular the invention relates to an improved automated apparatus for the mass production of granular crackers under closely controlled pressure-baking and expansion conditions. This invention particularly concerns an equipment enabling a greatly increased output per machine unit, and to an antomatic production line comprised of a plurality of such units.

An equipment for expanded cracker manufacture is notably described in Belgian Patent BE-A-1000311 and in European Patent EP-A-0359740, which are both assigned to the same inventor as the present invention.

The basic components of the equipment disclosed in said documents is incorporated herein by reference and do form the starting point of the present invention.

The previously proposed machine improvements in BE-A-1000311 mainly concerned the provision of a novel hydraulic drive and control unit formed of two aligned double-action cylinders, integrally assembled in one drive block and capable of selectively displacing the common drive shaft thereof in controlled sequential steps. Said drive shaft actuates a toggle-mechanism that is connected to a lower punch for slidingly reciprocating the same in and out of a mould cavity defined in a fixed upper mould. An adjustable micro-switch contact may be provided between the upper toggle arm and a switch support on the machine frame to controll the end of the driving stroke of one of the operating cylinder pistons and hence the uppermost compression position of the punch . Said drive and control arrangement ensures a reliable continuous operation of the machine without risk op overload and enables the obtainment of uniformly expanded crackers of constant thickness.

In EP-A-0359740 there is further disclosed a unique three-part mould configuration, characterized by a separately actuated peripheral mould element constituting thus a movable peripheral side-wall of a fixed upper mould.

Said peripheral ring mould is capable of being tightly pressed against a heatable fixed upper mould plate and of slidably receiving a lower heatable punch for crushing and pressure-baking a given quantity of granular material in the hermetically closed, heated chamber formed by the three cooperating mould elements. At the expansion stage of a cracker production cycle, the ring mould is slided downwards along the partially withdrawn punch received therein, which are then further lowered untill the expanded cracker resting on the punch head can be readily discharged therefrom by a pushing element of the grain feeding slide . Said arrangement has the important advantage of efficaciously solving the unpredictable occurence of mould sticking, which was hereto a major cause of inferior cracker quality, mould contamination and frequent machine downtime.

Notwithstanding the already achieved significant improvements, there was still a large need for further developments in such equipment. For mass production of different cracker types a better control of baking pressure and expansion conditions was required, especially at increased production rates, and in this connection a flexible and efficient control was needed to cope with unavoidable variations in grain feed and cereal type parameters. Furthermore there was a real need for increasing the production capacity of a single machine unit, bearing in mind that its advanced hydraulic drive and control means is an expensive piece of technology.

Indeed, when operating an equipment as discribed in EP-A-0359740 at higher speeds, machine perturbations and poor cracker quality was often noticed, which was assumed to be due to a too slow reaction velocity of the hydraulic drive system and to unsatisfactory regulation of final baking pressure with the previously used microswitch system for controlling the end point of the forward stroke of the actuated drive piston. The latter was assumed to be due to inevitable mechanical straining (elasto-plastic) of repeatedly stressed machine parts, incl. the toggle-mechanism , and further to certain variations in cereal supply conditions (grain size, volume, weight ; cereal type) which affect the grain crushing "strength - strain" curve and hence the attainable pressure in the mould for a preset adjustment position of the microswitch end control means. To overcome these remaining deficiencies the present inventor came to the finding, after extensive studies and trials, that an improved design of the hydraulic system of the drive unit was necessary, including the provision of a novel means for controlling the end point of the pressurizing stage. The economic the need for a greatly increased cracker-production capacity of a single machine or of a production line with plurial such machines, may in theory be fulfilled in different ways. First there is a possibility of increasing the machine drive speed, which is, however, restricted to the velocity limit inherent to the design of the hydraulic drive system.

It is also clear that the baking-cycle itself cannot be shortened too much since too large a reduction in baking time would require an increase in baking temperature which is not feasible due to the greater risk of burning and mould contamination.

On the other hand there is the possibility of conceiving a multiple-cracker mould as proposed e.g. in FR-A-2617014, but this requires a complex multi-chamber die design and/or an accordingly complex multiple driving arrangement. Moreover, the supply of correct quantities of granular raw material to a " multiple mould " at elevated machine pace becomes increasingly difficult or even impossible without grain spilling and machine contamination.

Another multi-cracker apparatus alternative is the arrangement of a series of moulds in a " multi-head " machine, as already suggested in EP-A-0359740. However, the arbitrary proposal of plural moulds, for example 5 sets, to be actuated simultaneously by a single drive and control unit appeared to create severe problems in machine stability. In particular the required accurate dimensional matching of the cooperating mould elements could not be maintained. This arrangement proved to cause even more insurmountable problems with three-part mould sets, given the additional requirement of assuring and maintaining a precise guidance of the ring molds in varying mechanical/thermal production conditions. In this respect the present inventor continued extensive investigations on the design and workability of multi-head machines comprising a different number of three-part mould sets driven by a single hydraulic unit. He found out however, that this high-production machine concept with a single hydraulic drive was not reliable in practice,in spite of all trials and mechanical measures for stabilization and mould guiding . There was, however, one exeption, notably a two-head machine.

The present invention has for its general object to provide a cracker production equipment which solves the above mentioned control and capacity insufficiencies of prior art machines in a very efficient way.

A particular object of this invention is to provide a compact high-capacity apparatus for preparing expanded grain crackers featuring one hydraulic drive and control system of improved concept and capable of accurately driving two three-part mould sets, which arrangement surprisingly appeared to give excellent productivity results without loss of machine stability and reliability.

A further object of the invention is to provide a hydraulic drive system for such machines with minimum hydraulic lag in order to allow accurate actuation steps at high speed. Still another object is to provide a high-capacity production line consisting of a plurality of such double-head apparatuses, which apparatuses may advantageously be assembled in a tandem arrangement along a cracker discharge belt. An additional object of the invention is the provision of such a high-capacity production line equipped with an improved cracker discharge and collecting system. According to the invention these and other objects are basically achieved by an apparatus characterized by technical features as defined in claim 1. Advantageous and preferred embodiments of the inventive apparatus are defined in the appended subclaims.

Other details and features of the invention will stand out from the following description, given herebelow by way of non-limitative examples and with reference to the accompanying drawings, wherein

Figure 1
gives a side view of a preferred twin-head apparatus embodiment according to the invention

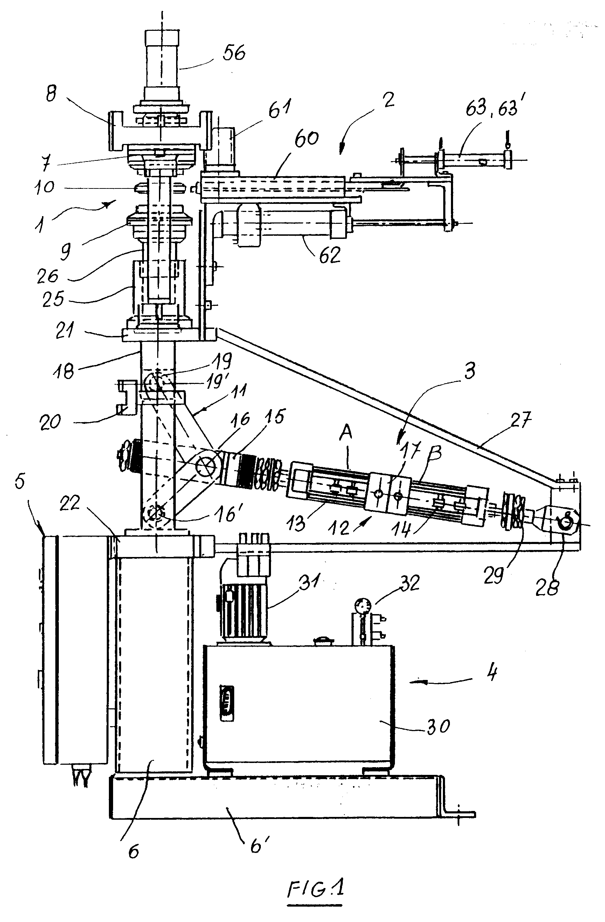

Figure 2
is a front view of the apparatus shown in figure 1

Figure 3
gives a schematic view of improved drive and control means according to the invention

Figure 4
is a lenghtwise cross-section of a preferred embodiment

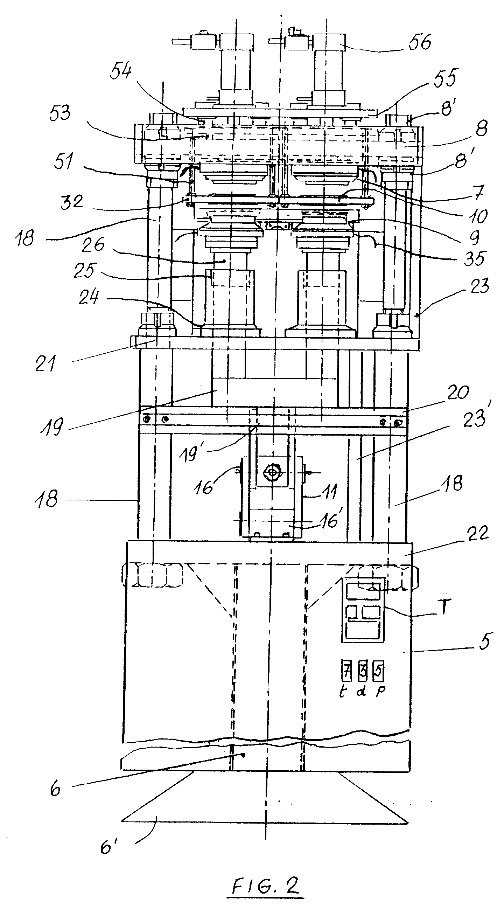

Figure 5
shows more into detail a three-part mold used in the inventive apparatus depicted in figures 1 and 2

Figures 6 a-b-c
illustrate ring mould designs for producing multiple crackers in one mould set

Figure 7
schematizes a component of the central control 0 means

Figures 8 a-b
show a tandem machine arrangement having a single hydraulic drive for two twin-head machines

Figure 9
is a side elevational vieuw of a cracker preparation collecting device coupled to a conveying belt of a multi-machine cracker production line

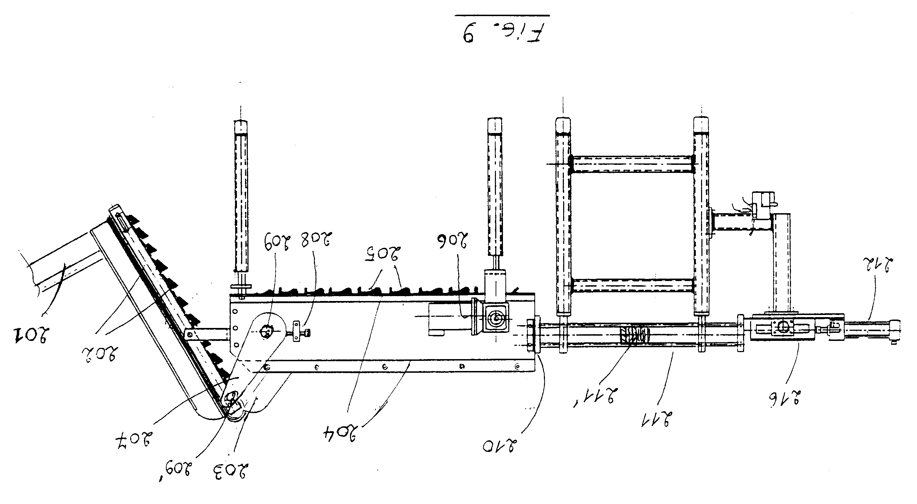

Figure 10
is a top vieuw of the end stage of the collecting device shown in fig.9, where the crackers are stacked in groups ready to be packaged

Referring to figures 1 and 2 , there is shown a preferred embodiment of a high-capacity cracker production apparatus according to this invention, which basically features a twin-head arrangement of two three-part moulds and one common drive block. The latter comprises the novel hydraulic drive and control improvements of this invention as described hereinbelow. A two-arm toggle mechanism connected to the drive shaft of the hydraulic drive block transmits the hydraulic power to the twoo lower punches linked to the upper toggle arm for selective simultaneous actuation of the same .

This apparatus features a compact and most efficient design whereby all the mechanical and functional machine parts are arranged on a single selfsustaining frame such that the machine forms an autonomious unit that can be easily installed, deplaced and grouped according to required plant lay-out and available space. The main machine components comprise moulding means (1), feeding means (2), hydraulic driving means (3), hydraulic power means (4) and central command, control and monitor means (5) which are assembled onto a columnar machine frame comprised of two vertical posts (18) which are mounted on base support (6) with base plate (6').

Two three-part mould sets (1) are arranged side by side between supporting columns (18) and consist each of a fixed upper mould element (7), a driven lower mould element or punch (9) and a movable peripheral mould element or ring mould (10) which cooperate to define a compressable, heatable mould cavity therein. Upper and lower mould elements (7,9) are separately heated and temperature controlled allowing independant adjustment of required temperatures in both upper and lower mould elements of each mould set. A fixed upper mould plate (8) connecting the vertical posts (18) bears the fixed upper moulds (7) which are disposed at the underside thereof. Said mould plate (8) is finely adjustable in height by suitable fastening elements (8') at the upper part of the columnar posts (18). This height regulation allows to precisely adapt the fixed position of the upper moulds (7) in relation to a required preset top position of the punches (9) corresponding to a safe (unlocked) uppermost position of the fully raised toggle-mechanism (11), and further to achieve perfect parallellism between upper and lower mould surfaces. The ring moulds (10) and their actuators are fixed to the mould plate (8) with the actuators disposed above said plate, as will be described into more detail hereinbelow with reference to figure 5.

The two punches (9) are driven up and down by drive means (3) consisting of a hydraulic drive unit (12) with two cooperating pistons (13,14) actuating a drive shaft (15), and of a toggle-arm mechanism (11) having a central hinge block (16) connected to drive shaft (15).

The two punches (9) have parallel lower shaft members (26) slidably guided in bearing bushes (25) which have cylindrical housings (24) mounted on a horizontal support plate (21) which is fixedly connected to frame posts (18).

Between mould plate (7) and support plate (21) there are erected (preferably 4) regulable stiffening rods (23) which connect the 4 corners of the respective underside and upperside of mould plate (7) and support plate (21). In this way the cooperating guiding parts of the mould elements are adjustably secured against possible mismatch or distortion during running of the machine.

Similar stiffening bars (23') may be provided between support plates (21) and (22), although it is more preferred here to select a distortion-proof heavy column design.

The lower ends of punch shafts (26) are mounted on a horizontal cross-bar (19) which forms at its lower part a movable hinged connection (19') with the upper arm of the toggle-mechanism (11).

In this way the two punches are simultaneously driven up and down.The lower arm of the toggle-mechanism rotates around a fixed hinged connection (16') solidary with upper support plate (22) of frame support (6). A security stop plate (20) horizontally mounted between machine posts (18) prevents that toggle-mechanism (11) is pushed over its dead point or vertically erected position (180 degrees for max.angle formed by toggle-arms).

In pratice the angle between erected upper and lower toggle arms is adjusted to a maximum value below 180 degrees, preferably about 170 to 178 degrees, which determines the uppermost position of the punch touching then the fixed upper mould (8) (without grain feed). Said preset value can be adjusted by means of height regulable mould plate (7) in conjunction with a given dimensional design of drive unit, drive shaft and toggle mechanism. Drive unit (3,12) is mounted in a side frame (27) affixed to bearing plates (21) and (22) of the main frame, located above hydraulic power group (4). The back side of the drive unit is prolonged with a shaft (29) which forms a fixed hinge connection (28) with side frame (27). The hydraulic power group (4) mounted on base plate (6') basically comprises a hydraulic container (30) with motor (31). Pressure-control gauge (32) monitors hudraulic pressure and may comprise overpressure limiting means. Alternatively overpressure may be controlled by power-overload limiting means associated with motor (31). Suitable hydraulic valves and tubing provided for powering hydraulic cylinders A and B of unit (12) is not shown in the drawing. The central control panel (5) mounted to the lower front side of the machine frame (6) groups all necessary command, switch, control, program and display functions. It comprises a central processing unit loaded with a cracker production program wherein the following adjustable main parameters are integrated : baking time (t), baking pressure (p) and cracker expansion thickness (d). Desired combinations of these parameters can be selected, within predetermined (program) limits, by suitable positions of their respective command knobs or buttons. Alternatively and/or in addition thereto, the machine programm/steering unit may be connected to a central computer, which collects machine parameters and production data (monitoring function) and from which the machine program can be adapted (command function). Plural machines may be connected to said central computer unit, thereby allowing individual and simultaneous supervision/control of a production line consisting of a large number of autonomious machines. Furthermore the processing unit controls the required actuation sequence of the cooperating hydraulic pistons (13,14) and the command sequence of the pneumatic cylinders (42,43,56) actuating the feed means (2) and the ring mold elements (10).

The central control panel also comprises a separate processing unit for controlling upper and lower mold temperatures of the two-mould sets and for accordingly supplying electric power to the resistance heating elements (35) mounted in the interior of upper mould elements (7) and the punch heads (9). Thermocouple means (not shown) conveniently integrated in each of said mould elements give a direct reed-out (displayed on control panel) of instant upper and lower mould temperatures, and there electric signal is directly converted, preferably by the intermediate of a special "self-tuning" program running on said processing unit, in an adjustable supply of electric power to the resistance heaters of the respective mould elements, taking into account preset mould temperature, ambient thermal conditions and instantaneous cracker production conditions (weight, thickness, production rate...).

In this way actual mould temperatures can be kept within a narrow range of about +/-1 degree Celsius of preset temperature, notwithstanding fluctuating production circumstances.

Feeding means (1) include i.a. a feeding plate 60 with dosimeter slides and pneumatic cylinders 62 and 63,63' for actuating said plate and slides. Reference numeral 61 is a grain supply tube).

The installed novel means for ensuring a precise control of cracker preparation in terms of ultimate baking pressure (Pu) and expanded cracker thickness (d) according to the present invention are greatly improved over previous control means in that they are no longer sensitive to normal variations in grain feed parameters and to certain mechanical limitations of the used drive and transmission members, which otherwise affected the final crushing/compressing stroke and further the thickness and surface shape/structure of a finished cracker. In a preferred embodiment said novel means comprise the proper combination of a redesigned quick-reacting hydraulic drive system and of specific hydraulic power control means steered from the central control panel.

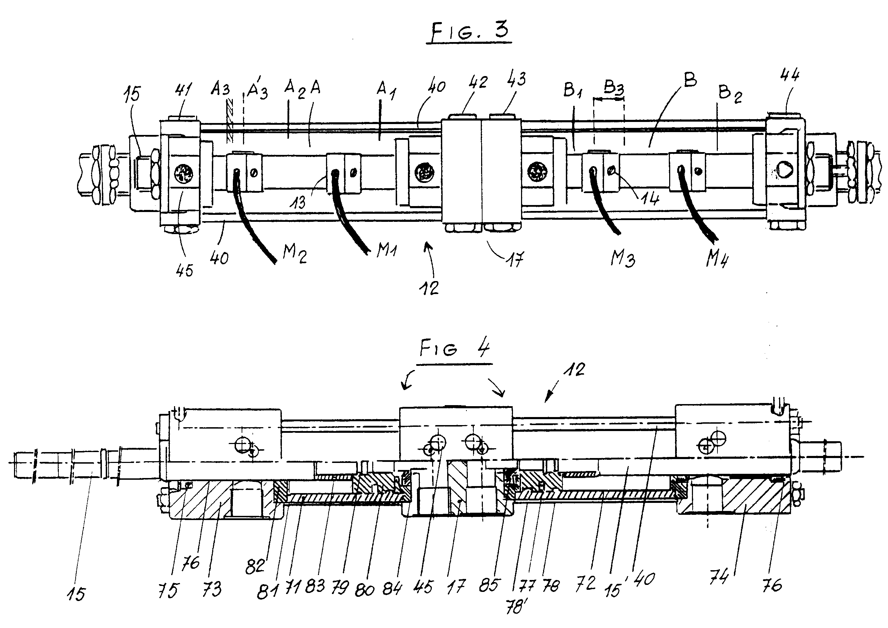

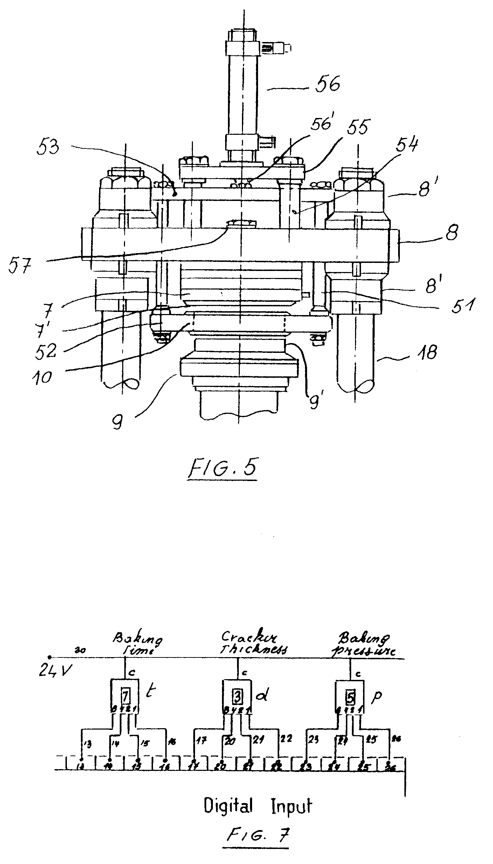

The improved hydraulic drive and control unit is illustrated in figures 3 and 4. Referring to figure 3, schematizing a hydraulic drive block 12, it is shown that two double action cylinders A and B are aligned and fitted in a traction frame comprising 4 traction bars 40 and end flanges 41,42,43 and 44 with adjacent flanges 42,43 forming the block separation mid flange. Reference 45 represents the adjustable magnetic contacts M1 to M4; these are slidably located in predetermined positions which define the basic displacement regions or stroke lengths of the hydraulic pistons, actuated in a given sequence by the central control unit 5. The left cylinder A, driving shaft 15 connected to the toggle-mechanism, is adapted to perform the function of baking pressure controlling means.

The right cylinder B is adapted to function as expansion controlling means. Magnetic contacts M1 and M3 placed in positions A1 and B1 close to mid flange 17 define the retracted position of piston 13 of cylinder A and of piston 14 of cylinder B. When both pistons are withdrawn into A1 and B1, the mould is fully open with the punch in a lowermost position below to feeding slide (alarm or servicing position when machine is stopped). Contact M2 placed in A2 (with M3 in B1) defines the operating start or end position of the punch corresponding to grain feeding/cracker ejection. Contact M2 placed in B2 sets a given stoke lenght B1-B2 of oppositely displaced piston 14 of cylinder B, the amount of which defines the fall-back height of the punch in the reverse cycle B2-B1 of piston 14 of cylinder B.

Hence B1, located close to mid flange 17, also defines therein a stable fall-back position for the punch upon explosive expansion of the crushed pressure-roasted grains. In a cracker production cycle, piston 13 is first moved to its operating start position A2 and therafter piston 14 is displaced from B1 to B2. At this point piston 13 will commence its compression stroke from A2 to A3. Said stroke includes the last grain-crushing upward movement of the punch and the ultimate baking pressure build-up in the mould. In earlier apparatus designs, the end of the compression stroke was controlled by an end switch element, e.g. a contact placed in a position A3 and/or by an adjustable microswitch contact elements working between a toggle arm and a fixed frame member. These adjustable contact means besically function on preset approaching distance, which seems precise enough for uniform constant conditions of grain feed and constant stiffness/elasticity of structural members. However, even in such circumstances the actual maximum pressure build-up in the baking mould could still considerably fluctuate given the disproportionately large effect of small distortions (tenths of micrometers) and of inhomogeneous grain distribution on the accuracy of the actual uppermost punch position and hence on final pressure.

According to the invention the end point A3 is not a fixed position preset by distance switch means, but is defined as a slightly variable point of a small region A3A'3 which is controlled by an adjustable short (extra)time duration during which a hydraulic valve for pressure build-up is kept open. Indeed, the final fraction A'3A3 of the total piston displacement having a stroke length A2-A3 corresponds to only a negligible displacement of the punch and thus to a comparitvely very small fraction of total crushing/compressing time. Accurate controll of said time fraction as a separate additional regulation means (tenths of a second) from the central control panel, based on empirical test and correlation data related to grain feed parameters (pressure-time correlation curve of fed grains), provides at once a surprisingly effective and simple means for establishing consistent pressure-baking conditions, and hence ensuring uniform starting pressures for the consequent explosive grain expansion.

On the other hand the finished cracker thickness and surface structure may be closely adjusted by a second timing means which actuates piston 14 for a preset time from its fallen back position B1 to a regulable position B3 between B1 and B2.

Thus, a complete cracker production cycle is preferably composed of the following actuating sequence and positions of the pistons 13 and 14 : (A1-A2 start) B1--B2, A2--A3, B2--B1, B1--B3--B1, A3--A2.

Figure 4 gives a more detailed view of a preferred design embodiment of a hydraulic drive unit used in an apparatus according to the invention. The hydraulic block 12 comprises two cylinders (71,72) with front and back flange (73,74) and a mid flange 17 fixed together by traction bars 40. The integral mid flange 17 is at the same time back flange of cylinder 71 and front flange of cylinder 72. It is shown that pistons 80 are withdrawn in their rest position close to said mid flange. The pistons actuate drive shafts (15,15') guided through the block flanges by bushings 76 and sealed by end seals (75,76). Reference numeral 45 denotes the screw connections for the hydraulic fluid supply tubes. The pistons are provided with a seal 77 and sliding guides (78,78'), both made from a frictionless material, e.g. PTFE to ensure high displacement speeds.

To increase the reaction velocity of the hydraulic shaft, which is most important at stroke reversal (fall back of punch upon expansion), the sliding resistance at the exits of front and back flanges is diminished by disposing there the combination of a damping ring 81 and sealing ring 82. Preferably the sealing ring is conical, to cooperate with a conical damping sleeve arranged at the end portion of drive shaft 15 (close to piston).

In this way erratic sticking and braking of the hydraulic shaft upon numerous reverse displacements (i.e. after full forward stroke and stop) is largely eliminated. Further improvements include the provision of conical damping chambers instead of the conventional damping cylinders in order to achieve a "progressive" damping at stroke end (mould closure) and at the same time to prevent a brake or friction effect when opening the mould. Said damping chambers are integrated in mid flange 17 and cooperate with a conically designed end portion 79 of the hydraulic shaft of each piston. Numeral 84 and 85 refer to a O-ring and an annular element. In addition air escape means are provided outside said damping chambers. Thus the novel integral two-cylinder design improves compactness, accurency and actuation velocity of the hydraulic drive unit.

Figure 5 illustrates the construction and arrangement of a three-part mould used in the apparatus of the present invention. Upper mould plate (8) , adjustably fixed to columnar frame posts 18 by regulable nuts 8' bears upper mould 7 fixed thereto by a central mounting element 57. A fixed bridge 55 fixedly erected on mould plate 8 by means of pins 54 supports a pneumatic cylinder element 56 having a actuatable shaft 56' passing through fixed bridge 55. Shaft 56' is connected to a lower movable bridge frame 53 comprising guiding rods 51 slidably passing through corresponding bores in upper mould plate 7. The lower end portions of said guiding bars are connected to side flange elements 52 of ring mould 10. Punch 9 is arranged below upper mould 7. The upper portion of the punch (punch head 9') is adapted to be slidably received within the cavity of ring mould 10, the latter in its uppermost position, when pressed against upper mould 7 by pneumatic cylinder 56, being sealed by sliding over a corresponding die element 7' of upper mould 7. The height of the cylindrical upper portion 9' of punch 9 is at least equal and preferably slightly larger than the thickness of ring mould 10 (e.g. 20 mm versus 18 mm depending on desired cracker thickness).

Advantageous embodiments of said mould configuration comprise multiple-cracker moulds formed of a ring mould as depicted in figure 5 and comprising a plurality of cylindrical mold cavities of any desired shape.

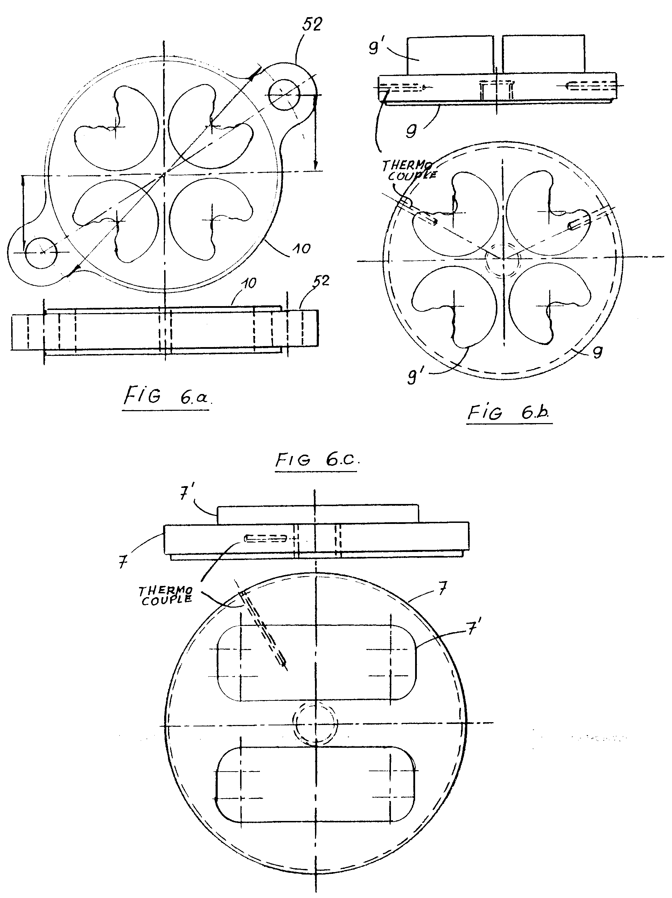

Said cavities slidingly cooperate with a punch having a head 9' in the form of cylindrical elevations of the same pattern and shape of said ring mold cavities. In the same manner the lower surface of the upper mould is provided with cylindrical die elements of similar shape and pattern, but of smaller height (e.g.4 to 10 mm). It has been found that said covering arrangement of simple cylindrical sliding contacts is surprisingly effective in sealing the mould cavity formed by the 3 cooperating mould elements. Examples are shown in figure 6 a-b for a moon-shaped cracker and in fig. 6 c for bar-shaped crackers. Remark the entirely cylindrical sealing surfaces 9' and 7' of upper and fower dies.

In addition to allowing the troublefree production of a plurality of small crackers with one mould set (without sticking), the present mould concept also has the advantage that it can be adapted to produce expanded crackers having a curved upper and lower surface, including comparatively thin crackers (chips). For this purpose only the compressing surfaces of upper and lower mould elevations have to be designed as matching concave and convex surface, wherely the ring mould remains unchanged, except possible adaptation of ring thickness depending on degree of curvature and thickness of the expanded cracker.

To improve the anti-sticking property of the three-part moulds, it is advantageous to apply a thin anti-sticking coating onto their contacting surfaces. Preferably a coating essentially comprised of TIN (titanicum nitride), including TiC, TiO and nitrides carbides, carbonitrides of other desirable metals, is used. Said coating can be obtained by sputtering, ionplating, plasma CVD and similar high-tech deposition processes.

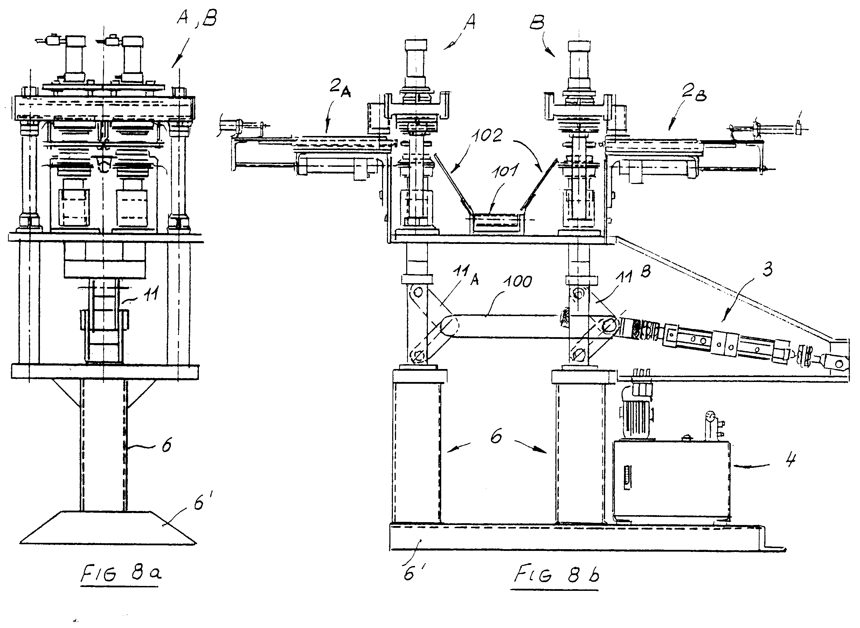

Figures 2 (lower part) and figure 7 schematize an example of a central command and control cabinet (5). As can be seen from figure 7, the adjustable parameters baking pressure (P), baking time (t) and cracker thickness (d) are digitally fed to a programmed microprocessing unit of the control system, which centralises commands and controls all the operational functions of the machine (drive means, feeding means, actuation means for ring mould, etc..). The mould temperature (T) is monitored, controlled and adapted by a seperate processing unit. In a twin-head machine there are four mould elements equipped with resistance heaters disposed below the compressing surfaces of respectively upper moulds and punches which are preferably of a layered design to ease their assembly.

Each moulding surface is provided with a thermocouple fitted in a radial bore extending close to the central fixation means of said layered moulding elements. This enables a very accurate, instantaneous control of mould temperature, whereby deviation from a desired baking temperature (conveniently from about 280 degrees Celsius to 320 degrees Celsius) is kept within close tolerances of about max. 1 degree Celsius. This operational uniformity is achievable in fluctuating pro-duction conditions (ambient temperature, produc-tion rate, cracker weight/thickness) thanks to the self-tuning property of the programmed temperature control and processing unit.

An advantageous embodiment of the present invention is illustrated in figures 8 a-b. Accordingly two apparatuses A and B, in this case twin-head machines equipped with ring moulds is shown in fig. 8 a, are arranged in tandem at opposite sides of a central cracker discharge and conveying means (101) passing between them at the lowery side of cracker discharge chutes (102) of their respective moulds, said conveying means being located above drive means (3,11). A single hydraulic drive unit (3) in accordance with this invention drives the two apparatuses simultaneously, which is achieved by linking the toggle mechanisms (11) of the apparatuses by a linking/transmission member (100). As can be seen from figure 8 b the grain feed and cracker push-off devices (2) are located at opposite sides of apparatuses A and B and of conveying means (101). Such an arrangement and layout is particularly advantageous in that it is very compact, room and labour saving and in that it needs only one sophisticated hydraulic drive system with corresponding central control panel for a plurality of cracker production mould sets (2 x 2 in this case), necessitating further only one machine setting/regulation for a quadrupled production. Of course a complete production line will consist of a series of such tandem driven apparatuses enclosing a central cracker discharge and conveyor belt which forwards a continuous stream of crackers to a convenient packaging station (not represented in the drawings).

To facilitate the subsequent cracker packaging operation the present invention additionally provides a cracker handling and collecting system by which the crackers coming from a discharge belt of a multi-machine cracker production line, are collected and prepared in the form of stacked groups of a desirable number of crackers, which stacks are then ready for packaging in any convenient way. In this way the cracker collecting and preparation system of this invention establishes an adaptable, automatic feeding link between a production line according to the present invention and a proper packaging station, and thereby saves the otherwise necessary manual work and interstation transports with conventional production lines where the crackers are mostly collected in bins or containers.

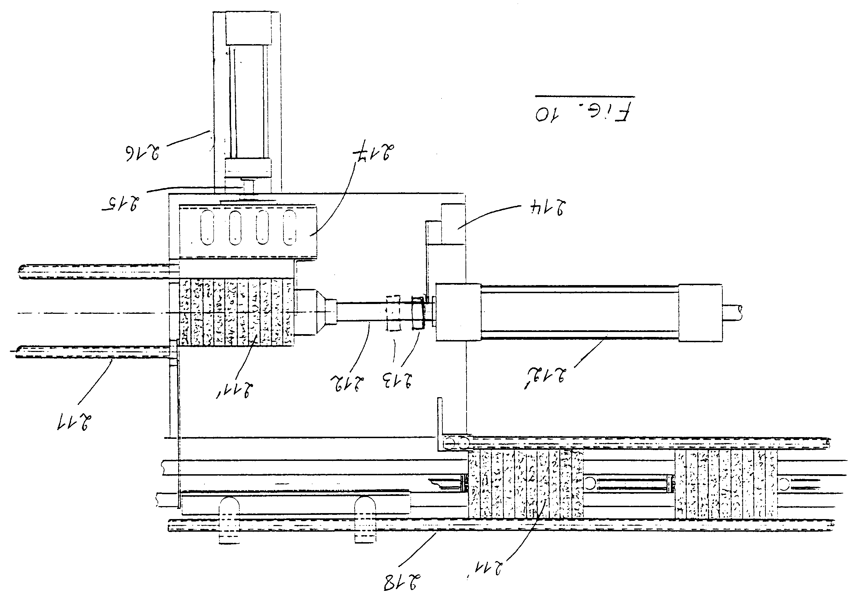

As can be seen in figures 9 and 10, the cracker collecting/preparation system is essentially comprised of the combination of an inclined supply belt 202 and a horizontal feed preparation belt 204, and a stacking tunnel 209 at the end of which horizontal stacks containing a desired number of up-right standing crackers are moved stack by stack to a feed channel of a packaging machine.

The crackers coming from the conveyor belt of a cracker production line (see e.g. reference numeral 101, fig 8b) are discharged in a chute 201. From this point the crackers are separated and moved upwards by inclined belt 202 which delivers the crackers one by one to horizontal feed preparation belt 204 via connective sliding chute 203, such that each cracker is exactly dropped in one of the successive holder elements (205) from which preparation belt (204) is composed. For achieving correct delivery of the subsequent crackers in successive holders (205) the inclined belt (202) and preparation belt are synchronised. Firstly the frequency of electrive drive motor (206) is regulated to reach a desired speed of feed preparation belt (204) according to required cracker capacity, and then the supply speed and the position of inclined belt (202) are adjusted by means of synchronisation chain (207) and positioning element (208) acting on one of the chain wheels (209,209'). The preparation belt (204) moves the separated crackers each resting in a holder (207) to its turning end (210) where the holder elements (207) get then in an upright position and feed the crackers likwise in an upright position to the queueing end (210) of a horizontal stack of upright placed crackers (211') which is each time pushed a little bit forward by the passing holder with each new cracker joining the stack. The latter is slidingly supported and guided in a stacj channel or tunnel (211') of appropriate cross-section.

At its opposite end, i.e. when the stack leaves the cracker guide (211), the stacked crackers are withheld by a pneumatic piston element (212). An adjustable ring element (213) of said piston determines the stack lenght to be packaged, i.e. number of crackers per package. Indeed, when piston (212) is pushed back to this point by the forward sliding stack of crackers completely filling tunnel (211), switch element (214) is activated, piston (212) is withdrawn, and piston (215) of pneumatic stack mover (216) is actuated to shift the prepared stack of crackers (216), by means of its adaptable stack pushing member (217), towards the feed channel (218) of a packaging machine (not shown).

This additional improvement according to the present invention allows the cracker production of our inventive cracker manufacturing line to be fed in a completely automatic manner to a cracker packaging station.

A further improvement aspect of a multi-machine cracker manufacturing equipment of this invention consists in the provision of remote control, sensing and inspection means for each machine which are linked by suitable data communication lines to a central command and computer system. In this configuration the main parameters (time, mould, temperatures, expansion thickness) and production data of each machine can be individually followed and supervised, and hence the machine programm of a given machine may be centrally adapted if necessary (e.g. cycle pace, baking temperature, etc..). Moreover, by inclusion in each machine of separate auxiliary sensing means for quality control, e.g. cracker color measurement and/or black spot identification which gives an idea of baking degree and occurence of burnished areas, it becomes possible to couple quality supervision with preventive maintenance, e.g. by installment of automatic mould cleaners or steamers. In the latter case, a given machine will be automatically stopped when something is seriously wrong with its cracker appearance, whereafter the mould steamers of this machine will be put in operation to clean the mould parts by steam jets for a predetermined duration.

The invention is not limited to the embodiments described and exemplified in the above description and annexed drawings.

Other combinations and adaptations are readily derivable from the present invention which all fall under the scope of protection as defined in the following claims.

## Claims

1. High-capacity apparatus for producing granular crackers from cereal raw materials by a process of pressure-baking and expanding a given quantity of said cereal material in a heated mould, the apparatus consisting essentially of a compact columnar frame structure bearing respectively in the upper part thereof moulding means (1) and feeding means (2), in the central part thereof driving and actuation means (3) and in the lower part thereof hydraulic power means (4) and central steering and control means (5), for said moulding, feeding and driving means, said moulding means comprising an upper mould plate (8) affixed to and bridging the upper part of frame columns (18) with two heatable moulds located below said mould plate, each mould being composed of an upper heatable mould element (7) fixed to the underside of said mould plate, a movable ring mould element (10) and a driven lower mould element (9) or punch with the lower said shaft portion of said two punches being fixedly connected to a cross-bar (19), said driving and actuation means being comprised of a toggle-mechanism (11) actuated by a hydraulic drive block (12) whereby an upper toggle-arm is hingedly linked to said cross-bar (19), said hydraulic drive block consisting of two fixedly aligned double-action cylinders A and B actuating a drive shaft (15) connected to said toggle-mechanism, wherein a first hydraulic cylinder A is adapted to drive the punches to their compression stroke with controlled ultimate baking pressure, and wherein a second hydraulic cylinder B is adapted to define a fall back position of the punches, including an amount of expansions, after pressure baking, and further to precisely regulate an expanded cracker thickness, said ultimate baking pressure and said precise cracker thickness being controlled by separate timing means integrated in the central steering and control means (5), whereby a first timing means controls a pressure build-up duration of the hydraulic piston of cylinder A actuating the punch to its uppermost position in the mould, and whereby a second timing means controls an adjustable back-push amount of the hydraulic piston of cylinder B for actuating the punch up and down from its fallen-back position.

2. Apparatus for producing grain slices, crackers or waffles from substantially granular cereal materials by a controlled process of crushing, pressure-baking and expanding a quantity of said materials in a heated mould, said apparatus featuring a compact assembly of moulding means (1), grain feeding means (2), driving and actuation control means (3), hydraulic power means (4) and central steering/controlling means (5) which means are mounted on a generally L-shaped supporting frame (6); said moulding means comprising a stationary, heatable upper mould element (7) affixed to an adjustable mould bearing plate (8), a movable heatable lower mould element or punch (9) reciprocativyly driven upwards from a bottom feeding position to a top pressing position and then downwards over an intermediate expansion position again to its bottom position, and a slidable peripheral sleeve or ring mould element (10) which is movable between an upper closing position in which it seals the upper mould element and a lower open position in which it is slided over the lowered punch so as to allow cracker discharge and supply of granular material onto the punch, said upper, peripherial and lower mould elements cooperating to define a mould cavity therein for receiving said grain material to be hot compressed under high pressure subsequently be expanded when the mould is still closed, said driving and actuation control means comprising a two-arm toggle mechanism (11) connected to the punch and a hydraulic drive block (12) formed of two aligned cylinders which are joint back-to-back and have separately actuatable double-action pistons (13,14) for driving a hydraulic drive shaft (15) connected to the toggle-arm hinge (16), characterized in that the drive piston (13) of a first cylinder (A) disposed closest, is adapted to fulfill the function of controlling means for the compression of the granular material and the baking pressure in the mould; whereas the piston (14) of a second hydraulic cylinder (B) is adapted to control the required expansion extent and cracker thickness, whereby each piston basically has 3 specific displacement positions: (I) a first position (A1,B1) in which both pistons are retracted to the starting point of their opposite stroke close to the adjacent facing sides of a mid-flange (17) joining the two hydraulic cylinders, which position defines the lowest possible position of the punch and toggle-arms wherein the then entirely opened mould can be cleaned, (II) a second position (A2) of the first piston laying between its retracted position (A1) and a stroke end position, said adjusted position (A2) corresponding to the lower feeding position of the punch during cracker production, and also a second position (B2) of the oppositely displaced piston (14) of the second cylinder B which defines an adjustable expansion position of the punch in relation to the regulable distance B2-B1, and (III) a dependably controlled third (end)position A3 of the first piston (13) defining and controlling the attainable baking pressure and the end of the pressing/crushing upward movement of the punch during the compression cycle, while a third position B3 of the second piston (14) located between B1 and B2 defines a required constant expansion thickness, the piston displacements to preset positions A1,A2,B1,B2 being permanently controlled in production by their associated preset magnetic contacts, while on the contrary the end position A3 of the pressing piston (13) and the intermediate position of piston (14) B3 for the expanded cracker thickness regulation are defined in and controlled from a program running the central steering/controlling means (5), whereby displacement end point A3 is derived from an adjustable preset time during which a high-pressure valve remains opened for hydraulic pressure build-up in said first cylinder A, and whereby position B3 is determined by an adjustable incremental time for a given back-push length of piston (14) computed following a required final thickness of the produced cracker, said two cooperating pistons (13,14) being controlled from the central steering/controlling means (5) such that they are powered and displaced by hydraulic power means (4) in successive incremental steps through the positions A1 - A2,B1 - B2, A2 - A3, B2 - B1, B1 - B3 - B1, A3 - A2 for performing a cracker production cycle, the first displacement A1 - A2 being effectively needed only when starting from the lowest punch position.

3. Apparatus as defined in claims 1 and 2, wherein said hydraulic cylinders, comprise means to improve the damping property and the reaction velocity thereof, said means including the provision of a conical damping chamber close to the mid-flange (17), preferably common for both cylinders, and of a conical shape of a corresponding end portion of their cooperating hydraulic drive shafts, and further the arrangement of conical sealing rings at an exit port where a hydraulic shaft slides through a front, respectively back flange of the hydraulic block (13), said rings cooperating with a conical sleeve disposed around a corresponding mid-portion of said hydraulic shaft, said measures being effective in ensuring quick progressive damping of the pistons at the end of their stroke, i.e. when the punch falls back to its expansion position and in enhancing the release velocity of the pistons in the absence of frictional drag or sticking of the hydraulic shaft upon reverse actuation.

4. Apparatus as defined in claims 1 to 3, wherein said central steering/controlling means comprise a first program and microprocessor unit for controlling the process parameters baking time, pressure and expansion and for commanding the actuation means in driving, moulding and feeding, and a second program and microprocessor unit for monitoring, controlling and steering the temperature of and electric power supply to the upper and lower mould elements, said separate control means being adapted for effecting self-tuning regulation of mould temperature with a negligable amount of overshoot or undershoot of about max. 1 degree C.

5. Apparatus as defined in any one of claims 2 to 4 allowing a nearly doubled cracker production for a proportionally smaller increase in energy, operating and installation needs, characterized by a twin-head machine construction comprising the combination of two three-part mould sets arranged side by side between the two main frame posts (18) and of a single hydraulic drive block and toggle mechanism for simultaneously driving the two punches, said three-part moulds having an upper mould element affixed to a common upper mould plate (8) and ring mould elements equipped with separate pneumatic actuation means, moving bar bridges and fixed suspension bridges, and said punches being mounted with a lower shaft end portion thereof on a horizontal cross-bar below the punch shaft sliding guides, a central block of said cross-bar being hingedly connected to an upper arm of said toggle-mechanism whereby the vertical plane common to the axes of toggle-arms, hydraulic shaft and cylinders is perpendicular to the vertical plane common to the parallel punch shaft axes and cuts the horizontal cross-bar in a point equidistanced from said punch axes, and wherein the feed means preferably comprise a doubled dosimeter-slide with common supporting slide and drive but separate pneumatic actuators for the two dosimeter slide plates.

6. Apparatus as defined in claims 1 or 5, wherein the upper part of the columnar frame comprises a plurality of preferably 4 regulable stiffening bars extending vertically between the upper mould plate a lower horizontal frame plate supporting the punch guides, said stiffening bars being erected in 4 corner portions of said plates and adapted to establish and to maintain correct parallellism between upper, lower and peripheral mould faces, and wherein the lower part of the columnar frame at the level of the toggle-mechanism is protected against buckling and comprises a means for stopping the toggle-arms before their angle reaches or exceeds 180 degrees.

7. Apparatus as defined in claims 1 to 6, characterized in that the three-part mould is designed as a multi-compartment mould for simultaneously preparing at least two crackers with a single mould set which comprises a movable peripheral ring or sleeve of a given thickness defined between horizontally parallel, flat upper and lower faces and including at least two cylindrical cavities of a shape and dimension as required by the desired cracker forms and sizes, said peripheral mould cooperating with a fixed upper mould element formed of flat die portions posessing the same pattern and shape as said cylindrical cavities and extending over a given small distance vertically below a flat upper mould surface such that said die portions seal the upper side of the mould cavities formed therein when the peripheral mould is pressed against the upper mould with the said die portions being slidingly received inside said cavities, and a movable punch having a die surface of the same design as the upper mould but of a height greater than the thickness or depth of said mould cavities, such that the peripheral mould is slidably receivable over a lowered punch below the upper face of said dies, and whereby said peripheral mould element is fixedly suspended to the guiding bars of a movable bridge frame which is actuated from above the upper mould plate by pneumatic means.

8. Apparatus as defined in claims 1 to 7, comprising a three-part mould wherein the upper and lower mould elements have matching pressing surfaces of a curved design, namely a concave upper mould surface and a convex lower mould pressing surface or vice versa, thereby allowing the production of cracker having a bent shape and wherein the contacting sealing and baking surfaces of upper, peripheral and lower mould elements are preferably coated with heat-resistant anti-sticking layer, which is comprised of a ceramic nitride, oxynitride or oxycarbonitride of a metal, preferably titanium, which coating obtained by vacuum plating, ion plating or sputtering.

9. Installation for the continuous production of crackers comprising at least two apparatuses as claimes in any one of claims 1 to 9 and a conveyor means (101) for discharge of produced crackers to a packaging station, characterized in that said at least two apparatuses are arranged in tandem at opposite sides of said conveyor means (101) passing between cracker discharge chutes (102) of said apparatuses, and in that each tandem arrangement of two apparatuses is simultaneously driven by a single hydraulic drive unit (3) connected to toggle-mechanisms (11) which are linked to each other by a linking member (100).

10. Installation for the countinuous automatic production of crackers comprising a plurality of at least two apparatuses as defined in claims 1 to 9, said apparatuses discharging their crackers onto a conveyor belt which is operably linked with a cracker collecting and preparation system allowing a fully automatic feed of crackers, prepared in the form of tight stacks of a desired number of crackers, from said conveyor belt to a packaging station (stack wrapping machine), said cracker collecting and preparation system being essentially comprised of an inclined supply and separation band, a horizontal belt for individual cracker holding and their upright delivery to a horizontal guiding channel of upright stacked crackers and of a pneumatic device for cross-moving cracker stacks of desired lenght to a (stack)feed channel of a suitable packaging station.

FIG 1

FIG. 2

FIG. 3

FIG 4

FIG. 5

Digital Input

FIG. 7

*FiG 6.a.*

*FiG 6.b.*

*FiG 6.c.*

FIG 8b

FIG 8a

Fig. 9

Fig. 10